# EUROPEAN PATENT APPLICATION

(11) **EP 4 471 750 A1**
(43) Date of publication of application: **04.12.2024**
(21) Application number: 22757822.6
(22) Date of filing: 10.02.2022
(51) Int. Cl.: G09F 9/30

(54) **DISPLAY DEVICE**

(30) Priority: 26.01.2022 CN 202210091543
(71) Applicant: Wuhan China Star Optoelectronics Semiconductor Display Technology Co., Ltd., Wuhan, Hubei 430079 (CN)
(72) Inventor: WANG, Wenqiang, Wuhan, Hubei 430079 (CN)
(74) Representative: Murgitroyd & Company
(86) International application number: PCT/CN2022/075821
(87) International publication number: WO 2023/142163

(57) **Abstract**

A foldable display device includes a first front frame disposed corresponding to a first middle frame and a second front frame disposed corresponding to a second middle frame. The first front frame includes a first top end portion fixedly connected to the first middle frame, and a first side portion movably connected to the first middle frame. The second front frame includes a second top end portion fixedly connected to the second middle frame, and a second side portion movably connected to the second middle frame. A first magnet and a second magnet are correspondingly disposed on the first side portion and the second side portion, respectively.

## Description

This application claims priority of China Patent Application No. 202210091543.3, filed January 26, 2022, titled "display device", the disclosures of which is incorporated herein by reference in its entirety.

### BACKGROUND OF INVENTION

### 1. FIELD OF INVENTION

The present application relates to a technical field of displays, and particularly to, a display device.

### 2. RELATED ART

Development of flexible display technology has been greatly promoting commercial markets of foldable mobile phones and foldable computers. Market share of foldable mobile phones is very likely to exceed that of candy bar mobile phones in the long run. Unfortunately, due to the fact that many technical problems of foldable mobile phones are still pending to be solved with reasonable and feasible solutions, sales share of foldable mobile phones is far below expectations. Currently, people are most concerned about the reliability and durability of foldable mobile phones. Compared with candy bar phones, when foldable phones are in folded and storage states, since flexible screens cannot be completely folded together, a certain gap must be reserved to ensure that screen bodies are not damaged. Therefore, when designing folding hinges, folding radius cannot be laid aside. However, in current folding mechanisms, the folding hinges need to be assembled and designed with middle frame structures of mobile phones. After folding, left and right middle frames cannot be completely closed, causing gaps between front frame structures in folded areas. As a result, surfaces of screens are prone to foreign objects from the gaps, giving rise to damage to the screens.

### SUMMARY OF INVENTION

An object of the present application is to overcome a technical problem of gaps are occurred between oppositely arranged front frames of current foldable display devices in folded states.

The present application provides a display device to mitigate the technical problem of gaps occurred between oppositely arranged front frames of current foldable display devices in folded states.

The present application provides a display device, including:
a middle frame member including a first middle frame and a second middle frame;
a rotating member accommodated in the middle frame member and connected with the first middle frame and the second middle frame;
a display panel disposed on a side of the middle frame member and the rotating member; and
a front frame member disposed on a side of the display panel away from the middle frame member and covering at least part of a side surface of the display panel.

The front frame member includes a first front frame disposed corresponding to the first middle frame and a second front frame disposed corresponding to the second middle frame. The first front frame includes a first top end portion fixedly connected to the first middle frame and located away from the second front frame, and a first side portion movably connected to the first middle frame and located close to the second front frame. The second front frame includes a second top end portion fixedly connected to the second middle frame and located away from the first front frame, and a second side portion movably connected to the second middle frame and located close to the first front frame.

The first side portion is provided with a first magnet, the second side portion is provided with a second magnet, and a magnetic pole of the first magnet on a side away from the display panel is different from a magnetic pole of the second magnet on the side away from the display panel. The first magnet and the second magnet at least partially overlap each other when the display device is in a folded state.

In the display device of the present application, a third magnet is disposed on a side of the first middle frame facing the display panel, a fourth magnet is provided on a side of the second middle frame facing the display panel, the third magnet at least partially overlaps the first magnet, and the fourth magnet at least partially overlaps the second magnet.

A magnetic pole of a side of the third magnet facing the first magnet is different from a magnetic pole of a side of the first magnet facing the third magnet, and a magnetic pole of a side of the fourth magnet facing the second magnet is different from a magnetic pole of a side of the second magnet facing the fourth magnet.

In the display device of the present application, when the display device is in the folded state, a magnetic force between the first magnet and the second magnet is greater than a magnetic force between the first magnet and the third magnet and a magnetic force between the second magnet and the fourth magnet.

In the display device of the present application, the first magnet covers at least part of the first side portion, and the second magnet covers at least part of the second side portion.

In the display device of the present application, the first magnet is disposed at one end of the first side portion close to the second side portion, and the second magnet is disposed at one end of the second side portion close to the first side portion.

In the display device of the present application, the first front frame further includes a first flexible portion connected between the first top end portion and the first side portion, and the second front frame further includes a second flexible portion connected between the second top end portion and the second side portion.

In the display device of the present application, a width of at least part of the first flexible portion is less than a width of the first top end portion and a width of the first side portion.

In the display device of the present application, a width of at least part of the second flexible portion is less than a width of the second top end portion and a width of the second side portion.

In the display device of the present application, a thickness of at least part of the first flexible portion is less than a thickness of the first top end portion and a thickness of the first side portion.

In the display device of the present application, a thickness of at least part of the second flexible portion is less than a thickness of the second top end portion and a thickness of the second side portion.

In the display device of the present application, at least part of the first flexible portion has a corrugated structure, and at least part of the second flexible portion has a corrugated structure.

In the display device of the present application, the first side portion defines a first positioning hole, and a first positioning shaft is disposed in the first middle frame and is movably installed in the first positioning hole.

In the display device of the present application, the second side portion defines a second positioning hole, and a second positioning shaft is disposed in the second middle frame and is movably installed in the second positioning hole.

In the display device of the present application, the display device further includes a first bushing fixed in the first positioning hole and a second bushing fixed in the second positioning hole.

The first bushing is arranged in a circumferential direction of the first positioning hole, the first positioning shaft passes through the first bushing.

The second bushing is arranged in a circumferential direction of the second positioning hole, and the second positioning shaft passes through the first bushing.

In the display device of the present application, the display device further includes a first adhesive body and a second adhesive body, the first adhesive body is applied between the first top end portion and the first middle frame, and the second adhesive body is applied between the second top end portion and the second middle frame.

In the display device of the present application, the rotating member includes a rotating hinge.

The display device further includes a hinge support accommodated in the middle frame member and connected with the rotating hinge, and a rear cover disposed on a side of the middle frame member away from the display panel.

In the display device of the present application, a groove is formed in a juncture of the first middle frame and the second middle frame, and the rotating member is located in the groove.

In the display device of the present application, the first side portion includes two parts located on opposite sides of the first top end portion, respectively, and the second side portion includes two parts located on opposite sides of the second top end portion, respectively.

In the display device of the present application, a number of the first magnet is two, and the two first magnets are disposed corresponding to the two parts of the first side portion, respectively, and wherein a number of the second magnet is two, and the two second magnets are disposed corresponding to the two parts of the second side portion, respectively.

The present application further provides a display device, including:
a middle frame member including a first middle frame and a second middle frame;
a rotating member accommodated in the middle frame member and connected with the first middle frame and the second middle frame;
a display panel disposed on a side of the middle frame member and the rotating member; and
a front frame member disposed on a side of the display panel away from the middle frame member and covering at least part of a side surface of the display panel, wherein the front frame member includes a first front frame disposed corresponding to the first middle frame and a second front frame disposed corresponding to the second middle frame.

The first front frame includes a first top end portion fixedly connected to the first middle frame and located away from the second front frame, a first side portion movably connected to the first middle frame and located close to the second front frame, and a first flexible portion connected between the first top end portion and the first side portion, wherein the second front frame includes a second top end portion fixedly connected to the second middle frame and located away from the first front frame, a second side portion movably connected to the second middle frame and located close to the first front frame, and a second flexible portion connected between the second top end portion and the second side portion and a corrugated structure disposed on part of the second top end portion.

The first side portion is provided with a first magnet, the second side portion is provided with a second magnet, and a magnetic pole of the first magnet on a side away from the display panel is different from a magnetic pole of the second magnet on the side away from the display panel. The first magnet and the second magnet at least partially overlap each other when the display device is in a folded state.

The present application has advantageous effects as follows: the present application provides a foldable display device, including a first front frame disposed corresponding to a first middle frame, and a second front frame disposed corresponding to a second middle frame. The first front frame includes a first top end portion fixedly connected to the first middle frame, and a first side portion movably connected to the first middle frame. The second front frame includes a second top end portion fixedly connected to the second middle frame, and a second side portion movably connected to the second middle frame. The first side portion and the second side portion are provided with a first magnet and a second magnet, respectively, and corresponding ends of the first magnet and the second magnet have different magnetic poles. In the present application, by arranging the movable first side portion and the second side portion in the front frame member and disposing the first magnet and the second magnet on the first side portion and the second side portion, respectively, a magnetic force attracting each other is generated between the first magnet and the second magnet, and in a folded state, the first side portion and the second side portion are brought to move close to each other through the magnetic attraction, thereby eliminating the occurrence of a folding gap, improving capability of the display device to resist the entry of foreign objects, and enhancing product quality.

### BRIEF DESCRIPTION OF DRAWINGS

In order to better illustrate the technical solutions in the embodiments or in the prior art, the following briefly introduces the accompanying drawings for describing the embodiments. Apparently, the accompanying drawings in the following description show merely some embodiments of the present invention, and a person skilled in the art may still derive other drawings from these accompanying drawings without creative efforts.
FIG. 1 is a schematic structural view of a display device in an expanded state provided by an embodiment of the present application.
FIG. 2 is a partial exploded view of a display device provided by an embodiment of the present application.
FIG. 3 is an exploded view of a front frame member of a display device provided by an embodiment of the present application.
FIG. 4 is an enlarged view of an annotated area A of the front frame member of FIG. 3.
FIG. 5 is an enlarged view of an annotated area B of the front frame member of FIG. 3.
FIG. 6 is another partial exploded view of a display device provided by an embodiment of the present application.
FIG. 7 is a schematic structural view of a display device in a folded state provided by an embodiment of the present application.
FIG. 8 is an enlarged view of an annotated area C of the display device of FIG. 7.

### DESCRIPTION OF PREFERRED EMBODIMENTS

The following embodiments are referring to the accompanying drawings for exemplifying specific implementable embodiments of the present application. Directional terms described by the present application, such as upper, lower, front, back, left, right, inner, outer, side, etc., are only directions by referring to the accompanying drawings, and thus the used directional terms are used to describe and understand the present invention, but the present application is not limited thereto. In the drawings, units with similar structures are indicated by the same reference numerals.

An embodiment of the present application provides a foldable display device, including a first front frame disposed corresponding to a first middle frame, and a second front frame disposed corresponding to a second middle frame. The first front frame includes a first top end portion fixedly connected to the first middle frame, and a first side portion movably connected to the first middle frame. The second front frame includes a second top end portion fixedly connected to the second middle frame, and a second side portion movably connected to the second middle frame. The first side portion and the second side portion are provided with a first magnet and a second magnet, respectively, and corresponding ends of the first magnet and the second magnet have different magnetic poles. In the embodiment of the present application, by arranging the movable first side portion and the second side portion in the front frame member and disposing the first magnet and the second magnet on the first side portion and the second side portion, respectively, a magnetic force attracting each other is generated between the first magnet and the second magnet, and in a folded state, the first side portion and the second side portion are brought to move close to each other through the magnetic attraction, thereby eliminating the occurrence of a folding gap, improving capability of the display device to resist the entry of foreign objects, and enhancing product quality.

The related technical features such as the structure and function of the display device provided by the embodiments of the present application will be described below with reference to the accompanying drawings.

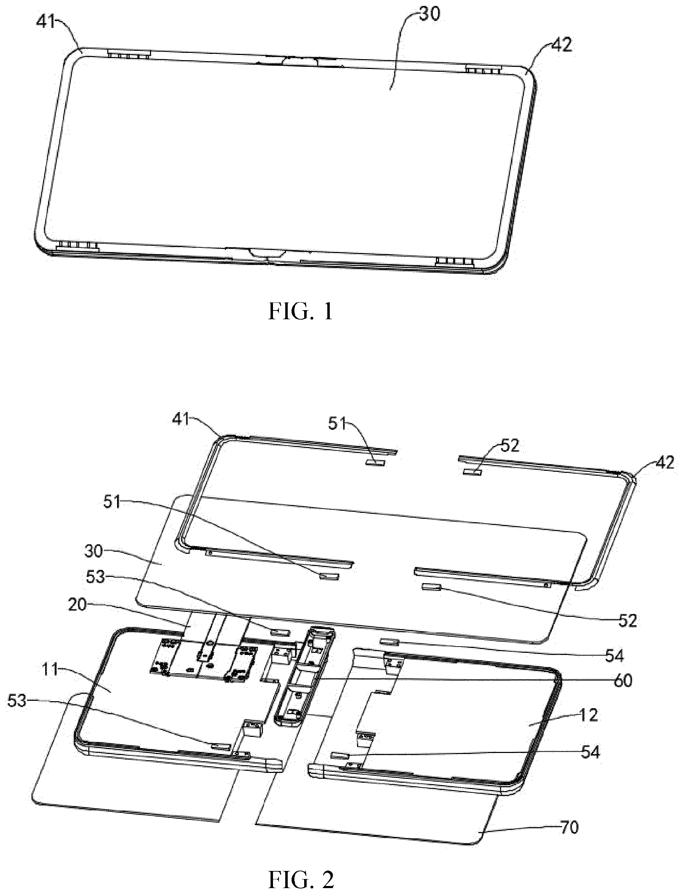

Please refer to FIGs. 1 and 2. FIG. 1 is a schematic structural view of a display device in an expanded state provided by an embodiment of the present application, and FIG. 2 is a partial exploded view of the display device provided by an embodiment of the present application. The display device includes a middle frame member, a rotating member 20 accommodated in the middle frame member, a display panel 30 arranged on a side of the middle frame member and the rotating member 20, and a front frame member disposed on a side of the display panel 30 away from the middle frame member. Specifically, the middle frame member includes a first middle frame 11 and a second middle frame 12 that are oppositely arranged. The front frame member includes a first front frame 41 disposed corresponding to the first middle frame 11 and a second front frame 42 disposed corresponding to the second middle frame 12. The middle frame member and the rotating member 20 provide support for the display panel 30. The rotating member 20 supports and pushes part of the display panel 30 to bend, so that the display device is switchable between an expanded state and a folded state. The front frame member fixes a position of the display panel 30 and protects edges of the display panel 30.

The first middle frame 11 and the second middle frame 12 are connected on opposite sides of the rotating member 20, respectively, and rotate in conjunction with the rotating member 20. Surfaces of the first middle frame 11, the second middle frame 12, and the rotating member 20 facing the display panel 30 are coplanar, thereby forming a flat supporting surface of the display panel 30.

Specifically, a groove is formed in a juncture of the first middle frame 11 and the second middle frame 12, and the rotating member 20 is located in the groove. The rotating member 20 may be a rotating hinge including two oppositely disposed rotating parts and a middle fixed part. The two rotating parts are rotatably connected to both sides of the middle fixed part, respectively. During a folding process of the display device, the two rotating parts move around the middle fixed part and approach each other to finally form a wedge-shaped or tear-drop-shaped space between the two rotating parts. During an expanded process of the display device, the two rotating parts travel around the middle fixing part and move away from each other to form a partially flat supporting surface for the display panel 30 in the end. The two rotating parts are connected with the first middle frame 11 and the second middle frame 12, respectively, and drive the first middle frame 11 and the second middle frame 12 to move closer to or away from each other during rotation.

The display panel 30 is disposed on the supporting surface formed by the first middle frame 11, the second middle frame 12, and the rotating member 20, and is bent or flattened with the movement of the first middle frame 11, the second middle frame 12, and the rotating member 20. The display panel 30 may be an organic light-emitting diode display panel, a micro light-emitting diode display panel, or other forms of display panels. The display panel 30 includes a flexible structure in at least an area of the display panel corresponding to the rotating member 20 in order to achieve bendability of the display panel 30 with the rotating member 20.

The front frame member is disposed on a side of the display panel 30 away from the middle frame member and covers at least part of a side surface of the display panel 30. Specifically, the front frame member covers the side surface of the display panel 30 and is fixedly or movably connected with the middle frame member to prevent foreign impurities from entering a gap between the display panel 30 and the middle frame member.

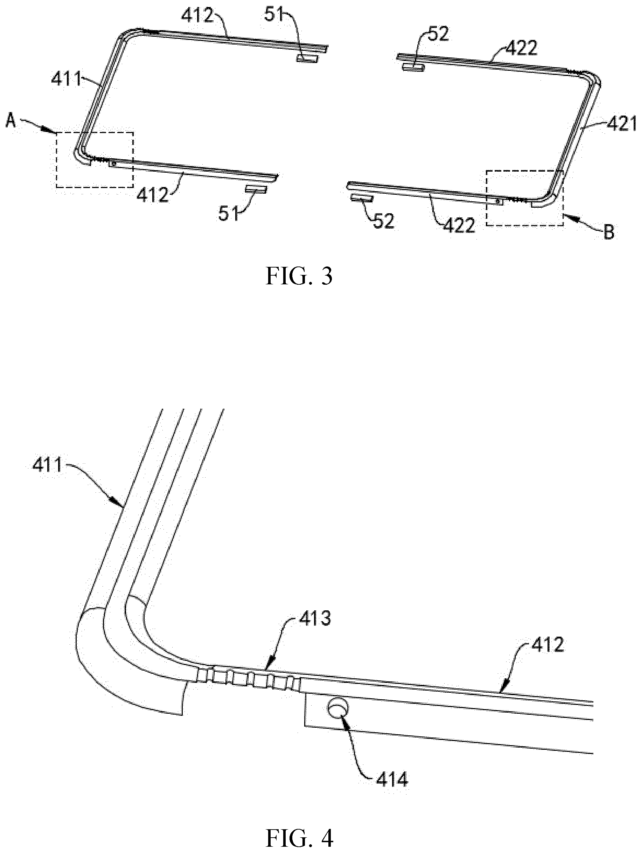

Please further refer to FIG. 3, which is an exploded view of the front frame member of the display device provided by an embodiment of the present application.

In this embodiment, the front frame member includes a first front frame 41 and a second front frame 42, the first front frame 41 is disposed corresponding to the first middle frame 11, and the second front frame 42 is disposed corresponding to the second middle frame 12. The first front frame 41 includes a first top end portion 411 fixedly connected to the first middle frame 11 and located away from the second front frame 42, and a first side portion 412 movably connected to the first middle frame 11 and located close to the second front frame 42. The second front frame 42 includes a second top end portion 421 fixedly connected to the second middle frame 12 and located away from the first front frame 41, and a second side portion 422 movably connected to the second middle frame 12 and located close to the first front frame 41.

Specifically, the first side portion 412 includes two parts located on opposite sides of the first top end portion 411, respectively, and the second side portion 422 also includes two parts located on opposite sides of the second top end portion 421, respectively. It can be understood that each of the first front frame 41 and the second front frame 42 has a structure being U-like in shape. The first top end portion 411 is a bottom portion of the U-shaped structure of the first front frame 41, the second top end portion 421 is a bottom portion of the U-shaped structure of the second front frame 42, and the second side portion 422 is two side portions of the U-shaped structure of the second front frame 42.

The first top end portion 411 and the first side portion 412 may or may not be connected; the second top end portion 421 and the second side portion 422 may or may not be connected. The first top portion 411 is fixed on the first middle frame 11, and the first side portion 412 is movable with respect to the first middle frame 11 for at least partially approaching or at least partially moving away from the first middle frame 11. The second top portion 421 is fixed on the second middle frame 12, and the second side portion 412 is movable with respect to the second middle frame 12 for at least partially approaching or at least partially moving away from the second middle frame 12.

The first side portion 412 is provided with a first magnet 51, and the second side portion 422 is provided with a second magnet 52. The first magnet 51 is located between the first side portion 412 and the display panel 30, and the second magnet 52 is disposed between the second side portion 422 and the display panel. A magnetic pole of the first magnet 51 on a side away from the display panel 30 is different from a magnetic pole of the second magnet 52 on the side away from the display panel 30. For example, if the magnetic pole of the first magnet 51 on the side away from the display panel 30 is a north (N) pole, the magnetic pole of the second magnet 52 on the side away from the display panel 30 is a south (S) pole. If the magnetic pole of the first magnet 51 on the side away from the display panel 30 is an S pole, the magnetic pole of the second magnet 52 on the side away from the display panel 30 is an N pole. In addition, when the display device is in the folded state, the first magnet 51 and the second magnet 52 at least partially overlap each other, so that the magnetic attraction occurs between the first magnet 51 and the second magnet 52. In this manner, under the action of the magnetic force, the first side portion 412 and the second side portion 422 are driven to move toward each other, thereby eliminating a gap between the first front frame 41 and the second front frame 42 in the folded state.

Optionally, a number of the first magnet 51 is two, and the two first magnets 51 are disposed corresponding to the two parts of the first side portion 412, respectively. A number of the second magnet 52 is also two, and the two second magnets 52 are disposed corresponding to the two parts of the second side portion 422, respectively.

Optionally, the first magnet 51 and the second magnet 52 may be elongated magnets, circular, or square magnets; the first magnet 51 may cover a partial area of the first side portion 412 along the first side portion 412, or cover an entire area where the first side portion 412 is located at. The second magnet 52 may cover a partial area of the second side portion 422 along the second side portion 422, or cover an entire area where the second side portion 412 is located at.

Optionally, the first magnet 51 is disposed at one end of the first side portion 412 close to the second side portion 422, and the second magnet 52 is disposed at one end of the second side portion 422 close to the first side portion 412, so that a larger magnetic force is generated in a bending area of the display device to ensure that the first front frame 41 and the second front frame 42 are attached to each other at a place corresponding to the bending area, thereby eliminating a front frame gap.

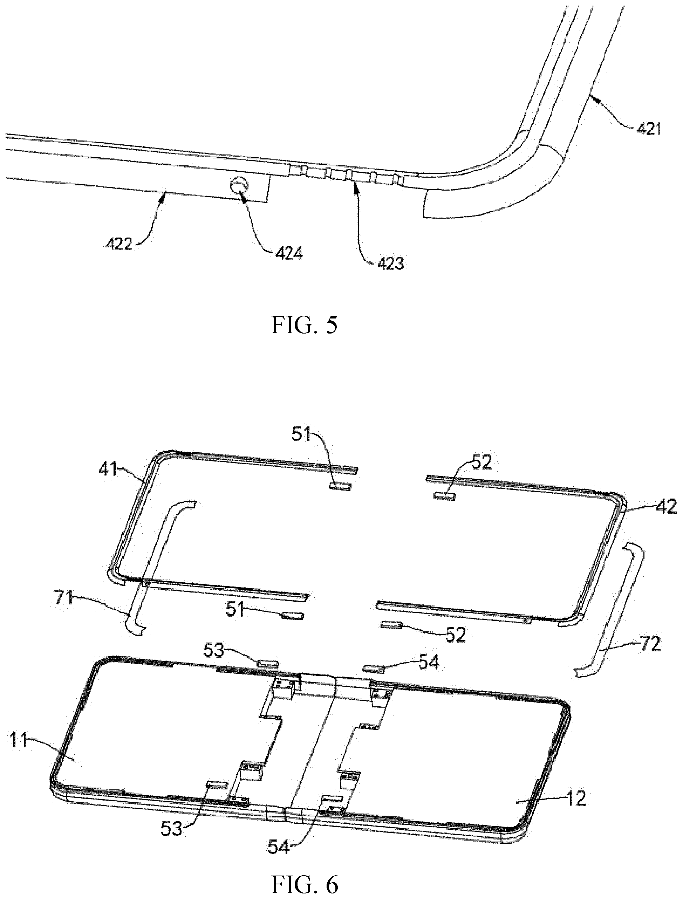

Please further refer to FIGs. 4 and 5. FIG. 4 is an enlarged view of an annotated area A of the front frame member of FIG. 3, and FIG. 5 is an enlarged view of an annotated area B of the front frame member of FIG. 3.

Optionally, the first front frame 41 further includes a first flexible portion 413 connected between the first top end portion 411 and the first side portion 412. The second front frame 42 further includes a second flexible portion 423 connected between the second top end portion 421 and the second side portion 422. The first flexible portion 413 weakens a binding force applied from the first top end portion 411 to the first side portion 412 during the movement of the first side portion 412 under the action of magnetic force; the second flexible portion 423 weakens a binding force applied from the second top end portion 421 to the second side portion 422 during the movement of the second side portion 422 under the action of the magnetic force.

Optionally, the first flexible portion 413 can be made of the same material as the first side portion 412 and the first top end portion 411. In this case, structural strength of the first flexible portion 413 has to be reduced. Alternatively, the first flexible portion 413 is made of a material with flexibility greater than that of a material of the first side portion 412 and the first top end portion 411. In this case, the first flexible portion 413 may not need to be reduced in structural strength. Likewise, the second flexible portion 423 can be made of the same material as the second side portion 422 and the second top end portion 421. In this case, structural strength of the second flexible portion 423 has to be reduced. Alternatively, the second flexible portion 423 is made of a material with flexibility greater than that of a material of the second side portion 422 and the second top end portion 421. In this case, the second flexible portion 413 may not need to be reduced in structural strength.

In order to make the first flexible portion 413 and the second flexible portion 423 have a certain degree of flexibility, structural adjustment may be performed on them.

Optionally, a thickness of at least part of the first flexible portion 413 is less than a thickness of the first top end portion 411 and a thickness of the first side portion 412 in order to reduce the structural strength of the first flexible portion 413, thereby improving the flexibility of the first flexible portion 413. A thickness of at least part of the second flexible portion 423 is less than a thickness of the second top end portion 421 and a thickness of the second side portion 422, thereby improving the flexibility of the second flexible portion 423.

Optionally, a width of at least part of the first flexible portion 413 is less than a width of the first top end portion 411 and a width of the first side portion 412, thereby improving the flexibility of the first flexible portion 413. A width of at least part of the second flexible portion 423 is less than a width of the second top end portion 421 and a width of the second side portion 422, thereby improving the flexibility of the second flexible portion 423.

Further, at least part of the first flexible portion 413 has a corrugated structure, and at least part of the second flexible portion 423 has a corrugated structure. It can be understood that the corrugated structure can exhibit higher extension and bending properties, so as to further improve the flexibility of the first flexible portion 413 and the second flexible portion 423 in order to meet the requirement of relative movement of the first side portion 412 and the second side portion 422 under the action of magnetic force.

Further, in order to ensure that movement directions of the first side portion 412 and the second side portion 422 are not skewed during the relative movement, the embodiments of the present application further provide the following technical features: the first side portion 412 is configured with a first positioning hole 414, and the first middle frame 11 is configured with a first positioning shaft corresponding to the first positioning hole 414. In addition, the first positioning shaft is movably installed in the first positioning hole 414, so that the movement direction of the first side portion 412 relative to the first middle frame 11 is restricted; correspondingly, the second side portion 422 is configured with a second positioning hole 424, and the second middle frame 12 is configured with a second positioning shaft corresponding to the second positioning hole 424. In addition, the second positioning shaft is movably installed in the second positioning hole 424, so that the movement direction of the second side portion 422 relative to the second middle frame 12 is restricted. Specifically, extension directions of the first positioning shaft and the second positioning shaft are both perpendicular to the display panel 30 to ensure that the movement directions of the first side portion 412 and the second side portion 422 are also perpendicular to the display panel 30.

Optionally, the display device further includes a first bushing fixed in the first positioning hole 414 and a second bushing fixed in the second positioning hole 424. The first bushing is arranged in a circumferential direction of the first positioning hole 414, and the first positioning shaft passes through the first bushing. The first bushing is configured to reduce a friction force between the first positioning hole 414 and the first positioning shaft to improve lubricity. The second bushing is arranged in a circumferential direction of the second positioning hole 424, and the second positioning shaft passes through the second bushing. The second bushing is configured to reduce a friction force between the second positioning hole 424 and the second positioning shaft to improve lubricity.

Optionally, the first bushing and the second bushing may be made of a metal material with a lower coefficient of friction.

Please further refer to FIG. 6, which is another partial exploded view of the display device provided by an embodiment of the present application. The display device further includes a first adhesive body 71 and a second adhesive body 72. The first adhesive body 71 is applied between the first top end portion 411 and the first middle frame 11 and is configured to fix the first top end portion 411 on the first middle frame 11; the second adhesive body 72 is applied between the second top end portion 421 and the second middle frame 12 and is configured to fix the second top end portion 421 on the second middle frame 12.

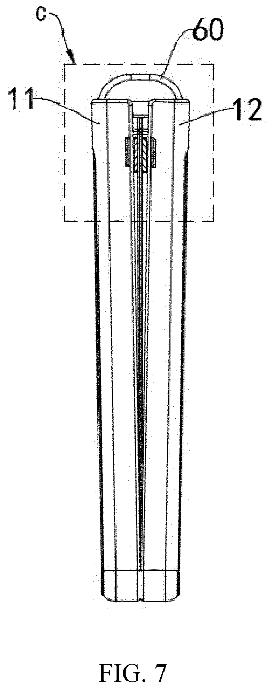

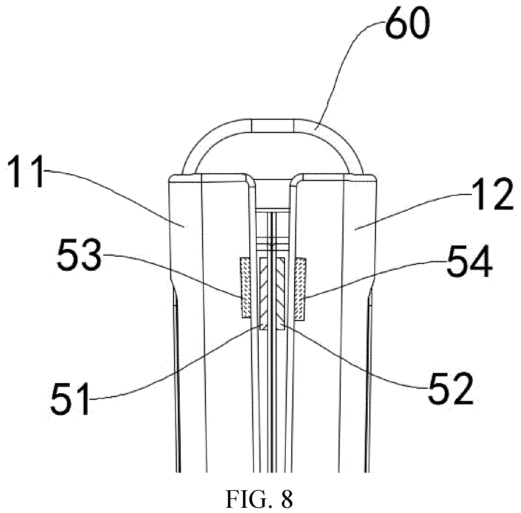

Further, please refer to FIGs. 1 to 8. FIG. 7 is a schematic structural view of the display device in the folded state provided by an embodiment of the present application. FIG. 8 is an enlarged view of an annotated area C of the display device of FIG. 7.

The display device further includes a third magnet 53 and a fourth magnet 54. The third magnet 53 is disposed on the side of the first middle frame 11 facing the display panel 30, and the fourth magnet 54 is disposed on the side of the second middle frame 12 facing the display panel 30. The third magnet 53 and the first magnet 51 are arranged in a one-to-one correspondence, and at least partially overlap each other; the fourth magnet 54 and the second magnet 52 are disposed in a one-to-one correspondence, and at least partially overlap each other.

A magnetic pole of the third magnet 53 on a side facing the first magnet 51 is different from a magnetic pole of the first magnet 51 on the side facing the third magnet 53, thereby producing a magnetic force attracting each other. A magnetic pole of the fourth magnet 54 on a side facing the second magnet 52 is different from a magnetic pole of the second magnet 52 on the side facing the fourth magnet 54, thereby producing a magnetic force attracting each other. Under the action of the magnetic force between the first magnet 51 and the third magnet 53, and the action of the magnetic force between the second magnet 52 and the fourth magnet 54, the first side portion 412 is enabled to move to the first middle frame 11 and the second side portion 422 is enabled to move to the second middle frame 12, thus ensuring that the front frame member presses the display panel 30 toward the middle frame member, thereby facilitating a tight assembly of edges of the display panel 30.

Optionally, the magnetic pole of the first magnet 51 on the side facing the third magnet 53 is the N pole, and the magnetic pole of the third magnet 53 on the side facing the first magnet is the S pole. The magnetic pole of the second magnet 52 on the side facing the fourth magnet 54 is the N pole, and the magnetic pole of the fourth magnet 54 on the side facing the second magnet is the N pole. The magnetic pole of the first magnet 51 on the side away from the display panel 30 is the N pole, and the magnetic pole of the second magnet 52 on the side away from the display panel 30 is the S pole.

When the display device is in the folded state, a magnetic force between the first magnet 51 and the second magnet 52 is greater than a magnetic force between the first magnet 51 and the third magnet 53 and a magnetic force between the second magnet 52 and the fourth magnet 54. It can be understood that when the display device is in the folded state, since the magnetic force between the first magnet 51 and the second magnet 52 is greater than the magnetic force between the first magnet 51 and the third magnet 53, the first side portion 412 will move in a direction toward the second magnet 52; in addition, since the magnetic force between the first magnet 51 and the second magnet 52 is greater than the magnetic force between the second magnet 52 and the fourth magnet 54, the second side portion 422 will move in a direction toward the first magnet 51, thereby achieving the relative movement of the first side portion 412 and the second side portion 422 and eliminating a gap between them.

Further, the display device further includes a hinge support 60 accommodated in the middle frame member and connected with the rotating hinge 20, and a rear cover 70 disposed on a side of the middle frame member away from the display panel 30. The rear cover 70 is configured to protect a bottom or side of the middle frame member.

Accordingly, based on the foldable display device provided in the embodiment of the present application, the first front frame 41 includes the first top end portion 411 fixedly connected to the first middle frame 11, and the first side portion 412 movably connected to the first middle frame 11. The second front frame 42 includes the second top end portion 421 fixedly connected to the second middle frame 12 and the second side portion 422 movably connected to the second middle frame 12. The first side portion 412 and the second side portion 422 are provided with the first magnet 51 and the second magnet 52, respectively. In this way, it can be achieved that the first side portion 412 and the second side portion 422 are closed together in the folded state through the magnetic attraction between the first magnet 51 and the second magnet 52, thereby preventing the occurrence of a folding gap, improving capability of the display device to resist the entry of foreign objects. In addition, the third magnet 53 and the fourth magnet 54 are disposed on the first middle frame 11 and the second middle frame 12, respectively. With the magnetic force between the first magnet 51 and the third magnet 53 and the magnetic force between the second magnet 52 and the fourth magnet 54, the first side portion 412 presses the display panel 30 toward the first middle frame 11, and the second side portion 422 presses the display panel 30 toward the second middle frame 12 in the expanded state and in the process of switching to the expanded state, thereby improving appearance quality of the display device in the expanded state.

It should be noted that although the preferred embodiments of this application are disclosed as above, the above preferred embodiments are not intended to limit the application. Those of ordinary skill in the art can make various changes and modifications without departing from the scope of this application. Therefore, the scope of protection of this application is based on the scope defined by the claims.

## Claims

1. A display device, comprising:
a middle frame member comprising a first middle frame and a second middle frame;
a rotating member accommodated in the middle frame member and connected with the first middle frame and the second middle frame;
a display panel disposed on a side of the middle frame member and the rotating member; and
a front frame member disposed on a side of the display panel away from the middle frame member and covering at least part of a side surface of the display panel, wherein the front frame member comprises a first front frame disposed corresponding to the first middle frame and a second front frame disposed corresponding to the second middle frame;
wherein the first front frame comprises a first top end portion fixedly connected to the first middle frame and located away from the second front frame, and a first side portion movably connected to the first middle frame and located close to the second front frame, wherein the second front frame comprises a second top end portion fixedly connected to the second middle frame and located away from the first front frame, and a second side portion movably connected to the second middle frame and located close to the first front frame; and
wherein a first magnet is disposed on the first side portion, a second magnet is disposed on the second side portion, and a magnetic pole of the first magnet on a side away from the display panel is different from a magnetic pole of the second magnet on the side away from the display panel, wherein the first magnet and the second magnet at least partially overlap each other when the display device is in a folded state.

2. The display device of claim 1, wherein a third magnet is disposed on a side of the first middle frame facing the display panel, a fourth magnet is provided on a side of the second middle frame facing the display panel, the third magnet at least partially overlaps the first magnet, and the fourth magnet at least partially overlaps the second magnet;
wherein a magnetic pole of a side of the third magnet facing the first magnet is different from a magnetic pole of a side of the first magnet facing the third magnet, and a magnetic pole of a side of the fourth magnet facing the second magnet is different from a magnetic pole of a side of the second magnet facing the fourth magnet.

3. The display device of claim 2, wherein when the display device is in the folded state, a magnetic force between the first magnet and the second magnet is greater than a magnetic force between the first magnet and the third magnet and a magnetic force between the second magnet and the fourth magnet.

4. The display device of claim 3, wherein the first magnet covers at least part of the first side portion, and the second magnet covers at least part of the second side portion.

5. The display device of claim 4, wherein the first magnet is disposed at one end of the first side portion close to the second side portion, and the second magnet is disposed at one end of the second side portion close to the first side portion.

6. The display device of claim 3, wherein the first front frame further comprises a first flexible portion connected between the first top end portion and the first side portion, and the second front frame further comprises a second flexible portion connected between the second top end portion and the second side portion.

7. The display device of claim 6, wherein a width of at least part of the first flexible portion is less than a width of the first top end portion and a width of the first side portion.

8. The display device of claim 6, wherein a width of at least part of the second flexible portion is less than a width of the second top end portion and a width of the second side portion.

9. The display device of claim 6, wherein a thickness of at least part of the first flexible portion is less than a thickness of the first top end portion and a thickness of the first side portion.

10. The display device of claim 6, wherein a thickness of at least part of the second flexible portion is less than a thickness of the second top end portion and a thickness of the second side portion.

11. The display device of claim 6, wherein at least part of the first flexible portion has a corrugated structure, and at least part of the second flexible portion has a corrugated structure.

12. The display device of claim 6, wherein the first side portion defines a first positioning hole, and a first positioning shaft is disposed in the first middle frame and is movably installed in the first positioning hole.

13. The display device of claim 12, wherein the second side portion defines a second positioning hole, and a second positioning shaft is disposed in the second middle frame and is movably installed in the second positioning hole.

14. The display device of claim 13, further comprising a first bushing fixed in the first positioning hole and a second bushing fixed in the second positioning hole;
wherein the first bushing is arranged in a circumferential direction of the first positioning hole, and the first positioning shaft passes through the first bushing, wherein the second bushing is arranged in a circumferential direction of the second positioning hole, and the second positioning shaft passes through the first bushing.

15. The display device of claim 1, further comprising a first adhesive body and a second adhesive body, the first adhesive body is applied between the first top end portion and the first middle frame, and the second adhesive body is applied between the second top end portion and the second middle frame.

16. The display device of claim 1, wherein the rotating member comprises a rotating hinge, and the display device further comprises a hinge support accommodated in the middle frame member and connected with the rotating hinge, and a rear cover disposed on a side of the middle frame member away from the display panel.

17. The display device of claim 1, wherein a groove is formed in a juncture of the first middle frame and the second middle frame, and the rotating member is located in the groove.

18. The display device of claim 1, wherein the first side portion comprises two parts located on opposite sides of the first top end portion, respectively, and the second side portion comprises two parts located on opposite sides of the second top end portion, respectively.

19. The display device of claim 18, wherein a number of the first magnet is two, and the two first magnets are disposed corresponding to the two parts of the first side portion, respectively, and wherein a number of the second magnet is two, and the two second magnets are disposed corresponding to the two parts of the second side portion, respectively.

20. A display device, comprising:
a middle frame member comprising a first middle frame and a second middle frame;
a rotating member accommodated in the middle frame member and connected with the first middle frame and the second middle frame;
a display panel disposed on a side of the middle frame member and the rotating member; and
a front frame member disposed on a side of the display panel away from the middle frame member and covering at least part of a side surface of the display panel, wherein the front frame member comprises a first front frame corresponding to the first middle frame and a second front frame corresponding to the second middle frame;
wherein the first front frame comprises a first top end portion fixedly connected to the first middle frame and located away from the second front frame, a first side portion movably connected to the first middle frame and located close to the second front frame, and a first flexible portion connected between the first top end portion and the first side portion, wherein the second front frame comprises a second top end portion fixedly connected to the second middle frame and located away from the first front frame, a second side portion movably connected to the second middle frame and located close to the first front frame, and a second flexible portion connected between the second top end portion and the second side portion and comprising a corrugated structure disposed on part of the second top end portion; and
wherein the first side portion is provided with a first magnet, the second side portion is provided with a second magnet, and a magnetic pole of the first magnet on a side away from the display panel is different from a magnetic pole of the second magnet on the side away from the display panel, wherein the first magnet and the second magnet at least partially overlap each other when the display device is in a folded state.
